# DEMANDE DE BREVET EUROPEEN

(11) **EP 0 884 815 A1**
(43) Date de publication de la demande: **16.12.1998**
(21) Numéro de dépôt: 98400551.2
(22) Date de dépôt: 10.03.1998
(51) Int. Cl.: H02G 3/04

(54) **Chemin de câble de faux-plafond ou de plancher technique**

(30) Priorité: 12.03.1997 FR 9702911
(71) Demandeur: INFRA +, 94242 L'Hay les Roses (FR)
(72) Inventeur: Nozick, Jacques, 75005 Paris (FR)
(74) Mandataire: CAPRI SARL

(57) **Abrégé**

Chemin de câble de faux-plafond ou de plancher technique destiné à recevoir des câbles de courant fort (7) et des câble de courant faible (8) pour le précâblage de locaux, ledit chemin de câble comprenant une structure allongée de réception (1) formant un berceau dans lequel les câbles (7, 8) sont disposés, caractérisé en ce que ladite structure (1) comprend un conduit (2) s'étendant sur toute la longueur de la structure (1) et destiné à la réception des câbles de courant fort (7), les câbles de courant faible s'étendant dans le berceau à l'extérieur du conduit.

## Description

La présente invention concerne un chemin de câble de faux-plafond ou de plancher technique destiné à recevoir des câbles de courant fort et des câble de courant faible. Ce type de chemins de câble est fréquemment utilisé pour le précâblage de locaux tels que des bureaux. Les chemins de câble se présentent fréquemment sous la forme d'une structure allongée de réception qui forme un berceau dans lequel sont disposés les câbles. Les conduits sont accrochés au plafond ou posés sur le sol en-dessous du plancher technique.

Jusqu'à présent dans l'art antérieur, on a toujours séparer les chemins de câble pour câble de courant faible des chemins de câble pour câble de courant fort pour les raisons suivantes :
1/ on évite ainsi les perturbations électromagnétiques entre les courants forts et les courants faibles. En effet, l'intensité des perturbations diminue en fonction du carré de la distance qui sépare les câbles.
2/ on augmente ainsi la sécurité des personnes en évitant tout risque d'électrocution.
3/ On évite ainsi tout risque de confusion entre les câbles de courant fort et de courant faible.

En général, les chemins de câble de courant fort et les chemins de câble de courant faible sont disposés soit côte à côte, soit de manière superposée avec un écartement conventionnel de 30 cm environ. Les prises pour les connexion de câbles de connexion aux équipements électriques installés dans le local sont disposés dans un des deux conduits, et on tire les câbles d'un conduit à l'autre pour la connexion à ces prises.

Cette disposition de l'art antérieur implique un encombrement important dû au dédoublement des chemins de câble pour les courants fort et les courants faibles.

Le but de la présente invention est de pallier les inconvénients de l'art antérieur en définissant un chemin de câble plus compact, moins cher, et qui prend moins de temps au montage et au câblage.

Pour ce faire, la présente invention a pour objet un chemin de câble de faux-plafond ou de plancher technique destiné à recevoir des câbles de courant fort et des câble de courant faible pour le précâblage de locaux, ledit chemin de câble comprenant une structure allongée de réception formant un berceau dans lequel les câbles sont disposés, ladite structure comprenant un conduit s'étendant sur toute la longueur de la structure et destiné à la réception des câbles de courant fort, les câbles de courant faible s'étendant dans le berceau à l'extérieur du conduit.

Avantageusement, le conduit est métallique ou métallisé. En général, le conduit pourra être réalisé en acier ou en aluminium, ce qui en fait un conduit de blindage.

Alors que le blindage était surtout utilisé pour les câbles de courant faible, dans la présente invention, on blinde les courants forts afin qu'ils ne perturbent pas les câbles de courant faible. Ainsi, dans un même chemin de câble, on peut disposer à la fois les câbles de courant fort et les câbles de courant faible sans que cela n'implique de perturbations électromagnétiques. On réalise ainsi un gain de place important, qui se traduit au niveau du montage par un gain de temps important. En effet, il est nécessaire de disposer ou d'accrocher deux conduits de câble, avec la présente invention, il n'est plus nécessaire que de disposer ou d'accrocher un seul chemin de câble pour les deux types de courant fort et faible. Le blindage qui sépare les câbles de courant fort et les câbles de courant faible divise distinctement le berceau de réception en deux compartiments parfaitement isolés l'un de l'autre, de sorte que l'on peut dire que l'on a deux chemins de câble distincts et isolés électromagnétiquement dans un seul berceau de réception.

Selon une forme de réalisation, le conduit fait partie intégrante de la structure de réception.

En variante, le conduit est rapporté et fixé sur la structure de réception.

Selon une autre caractéristique, le conduit comporte une ouverture longitudinale orientée vers l'extérieur de la structure et s'étendant sur la totalité de sa longueur. L'ouverture longitudinale permet un accès facile à l'intérieur de l'espace défini par le conduit. Son ouverture située vers l'extérieur de la structure facilite d'une part l'accès au conduit et d'autre part évite toute fuite électromagnétique qui pourrait perturber les courants faibles situés dans l'autre partie du berceau.

Avantageusement, ladite ouverture longitudinale comprend des bords latéraux adaptés à la réception par encliquetage de prises de courant fort et/ou de courant faible, et d'éléments de couvercle. Les bords latéraux de l'ouverture servent ainsi de rails de fixation par encliquetage pour les divers équipements électriques de connexion tels que les prises ainsi que les éléments de fermeture tels que les couvercle pour obturer de la manière la plus étanche le conduit de blindage.

Selon une autre forme de réalisation pratique, le conduit comprend des fenêtres arrières d'accès pour le passage des câbles de courant faible à l'intérieur du conduit.

De préférence, les fenêtres arrières d'accès sont respectivement pourvues de volets de fermeture rabattables.

L'invention sera maintenant plus amplement décrite en référence aux dessins joints donnant à titre d'exemple non limitatif donnant un mode de réalisation de la présente invention.

Sur les dessins :
- la figure 1 représente une vue en section transversale à travers un chemin de câble selon la présente invention,
- la figure 2 est une vue latérale du chemin de câble représentée sur la figure 1.

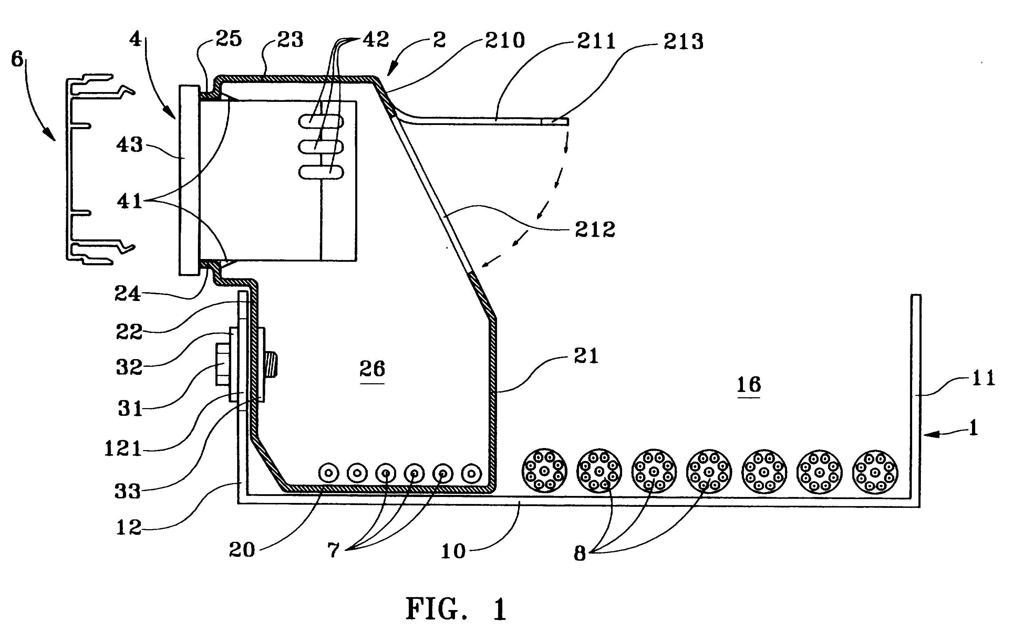

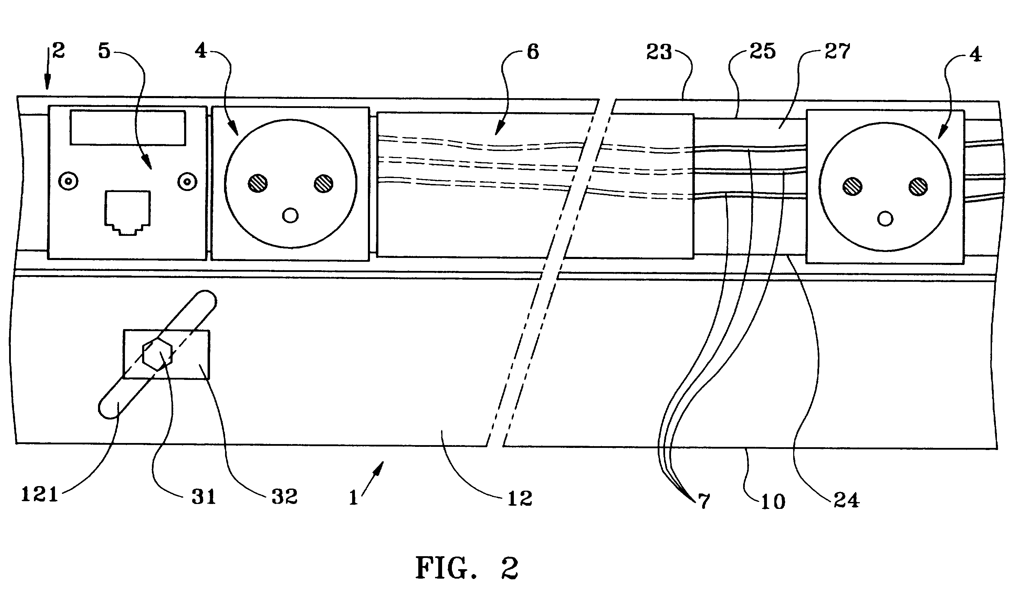

En se référant tout d'abord à la figure 1, on voit que le chemin de câble comprend deux éléments constitutifs essentiels, à savoir un berceau 1 et un conduit de blindage disposé dans le berceau 1. En effet, le berceau 1 présente une section transversale en forme de U et définit par conséquent un volume interne dans lequel est disposé le conduit 2 qui définit lui aussi un volume interne 26. Dans la forme de réalisation représentée sur les figures 1 et 2, le conduit 2 est un élément distinct rapporté et fixé dans le berceau 1. Toutefois, on peut également imaginé une autre forme de réalisation dans laquelle le conduit 2 fait partie intégrante du berceau 1. Par exemple, le tout pourra être réalisé en aluminium filé. Par conséquent, le mode de réalisation représenté sur les figures 1 et 2 mettant en oeuvre deux éléments constitutifs essentiels séparés 1 et 2 ne doit pas être considéré comme unique.

Le berceau 1 en forme de U constitue une structure allongée de réception d'une certaine longueur, par exemple trois mètres. Le berceau 1 comporte un fond 10 d'une largeur d'environ 20 à 30 cm, et deux branches latérales 11 et 12 d'une hauteur à 5 à 10 cm environ. Toutes ces dimensions sont données à titre indicatif uniquement pour rendre compte des dimensions du berceau 1.

Le conduit 2 se présente sous la forme d'une goulotte. Le conduit est de préférence réalisé en métal, par exemple en acier ou en aluminium, mais il peut également être réalisé en plastique, avantageusement avec une couche de métallisation. Le conduit est ainsi blindé. Le conduit présente deux bords latéraux 24 et 25 définissant une ouverture longitudinale 27 qui s'étend sur toute la longueur du conduit 2. Cette ouverture longitudinale 27 donne accès à un volume interne 26. Ce volume interne 26 est défini par une paroi de fond 20, une paroi arrière 21, une paroi avant 22 et une paroi supérieure 23. La paroi de fond 20 repose sur le fond 10 du berceau 1. La paroi avant 22 est en contact de la branche latérale 12 du berceau 1. La paroi arrière 21 est libre et donne sur le restant du berceau 1. La paroi supérieure 23 est située à niveau supérieur aux extrémités des branches latérales 11 et 12 du berceau 1. Pour la fixation du conduit de blindage 2 dans le berceau 1, la branche latérale 12 est percée d'une lumière oblique oblongue 121, qui est plus visible sur la figure 2. D'autre part, la paroi avant 22 du conduit 2 est pourvue intérieurement d'un plat taraudé 33 dans lequel peut être boulonné un boulon 31 associé à un plat 32 à partir de la face extérieure de la branche latérale 12 du berceau 1. On peut bien entendu imaginé d'autres systèmes de fixation du conduit de blindage 2 dans le berceau 1. Bien entendu dans la version filée en aluminium, ce problème ne se pose pas. L'ouverture longitudinale 27 est formée sur la paroi avant 22 du conduit 2. Par conséquent, l'ouverture longitudinale 27 est orientée vers l'extérieur du berceau 1, ce qui d'une part empêche toute fuite vers l'intérieur du berceau 1, et d'autre part facilite l'accès à l'intérieur du volume pendant l'opération de montage et de câblage. Les bords latéraux 24 et 25 du l'ouverture longitudinale 27 forment des rabats d'encliquetage comme on le verra ci-après. La paroi arrière 21 du conduit de blindage 2 est pourvue de fenêtres arrière 212 qui donne accès sur le volume interne du berceau 1 qui n'est pas occupé par le conduit blindage 2. Ces fenêtres d'accès permettent le passage de câble de courant faible à l'intérieur du conduit de blindage 2. De préférence, la dimension des fenêtres arrière d'accès 212 sont telles qu'elles permettent le passage d'une prise de courant faible. De ce fait, il est possible de faire passer des prises de courant faible déjà câblées à travers une fenêtre arrière d'accès 212. De préférence, les fenêtres arrière d'accès 212 sont pourvues de volets de fermeture rabattables 211 qui contribuent au blindage du conduit 2. Ces volets rabattables 211 font partie intégrante du conduit de blindage et sont articulés par simple pliage au niveau de la connexion du volet 211 au conduit de blindage 2. Avantageusement, l'extrémité libre du volet rabattable 212 est crénelée de manière à former de petites fenêtres de passage 213 pour les câbles de courant fiable.

Maintenant que la structure du chemin de câble constitué par le berceau 1 et le conduit 2 a été décrite en détail, il sera fait référence indifféremment aux figures 1 et 2 pour expliquer sa mise en oeuvre dans un faux-plafond ou un plancher technique, Le chemin de câble est amené sur le lieu de montage à l'état monté, c'est-à-dire avec le conduit de blindage 2 déjà fixé dans le berceau 1. On commence par disposer les chemins de câble à même le sol pour un faux-plancher ou suspendu au plafond pour un faux-plafond.

Selon l'invention, le conduit de blindage 2 divise le berceau 1 en deux compartiments distincts isolés électromagnétiquement l'un de l'autre définissant chacun un volume interne 26 respectivement 16. Le volume interne 26 définit à l'intérieur du conduit de blindage 2 sert à la réception des câbles de courant fort 7 alors que le volume interne 16 défini par la partie du berceau 11 non occupée par le conduit de blindage 2 sert à la réception de câbles de courant faible 8. On peut dire que les câbles de courant fort 7 sont isolés électromagnétiquement. Dans l'art antérieur, il est plutôt d'usage d'isoler les câbles de courant faible et de laisser les câbles de courant fort sans isolation.

L'opérateur commence donc à disposer les câbles de courant faible 8 dans le volume interne 16 défini dans le berceau 1. Une prise de courant faible 5 est connectée à un câble de courant faible 8 à un endroit souhaité. La prise de courant faible est ensuite passée à travers la fenêtre d'accès 212 la plus proche et extraite du volume interne 26 défini par le conduit 2 à travers l'ouverture longitudinale 27. Ainsi, à tous les endroits souhaités ou requis pour l'équipement du local à précâbler, des prises de courant faible 5 sont ainsi montées et faites passer à travers le conduit de blindage 2.

Quant aux prises de courant fort 4, elles peuvent être câblées à l'extérieur du conduit de blindage 2 de manière à constituer une guirlande de prises 4 reliées par de câbles de câbles de courant fort 7. Avantageusement, ces guirlandes de prises courant fort 4 peuvent par exemple être fabriquées en usine, ce qui réduirait considérablement le temps de câblage. Ces guirlandes pourraient être fabriquées avec des longueur de 10 à 15 m environ avec un pas de 1 à 2 mètres environ. L'opérateur chargé du montage du chemin de câble n'aurait alors plus qu'à encliqueter les prises de courant fort dans l'ouverture longitudinale 27 du conduit de blindage 2 et pousser les câbles de connexion 7 à l'intérieur du volume 26 défini par le conduit 2. Avantageusement, les prises de courant fort utilisées 4 peuvent être à contact autodénudant, de sorte que les prises 4 pourraient être installées sur les câbles de courant fort 7 sans les couper d'où le terme de guirlande de prise.

Pour la réception des prises 4 et 5 dans l'ouverture longitudinale 27, celles-ci sont équipées de languettes d'encliquetage telles que celles 41 représentées sur la figure 12 pour une prise de courant fort 4 qui permet un encliquetage des prises sur les bords latéraux 24, 25. Etant donné que l'ouverture 27 est formée sur la totalité de la longueur du conduit de blindage 2, les bords latéraux 24, 25 forment un rail d'encliquetage sur lequel les prises 4 et 5 sont encliquetées, mais peuvent coulisser. Ainsi, en laissant en peu de mou au câble 7 et 8, il est possible de déplacer les prises 4 et 5 dans le rail défini par les bords latéraux 24, 25 pour les amener à l'endroit désiré.

Avec la présente invention, il est à noter que le conduit de blindage 2 sert non seulement de compartiment blindé pour les câbles de courant fort, mais sert également d'organe de réception par encliquetage pour les prises de courant fort 4 mais également de courant faible 5.

Selon une forme de réalisation pratique, il est également prévu des éléments de couvercle 6 qui obturent l'ouverture longitudinale 27 entre les prises 4 et 5. Un tel élément de couvercle avec ces avantages induits est notamment décrits dans la demande de brevet (il fait que vous alliez chercher le n° !). Cet élément de couvercle sert également à obturer le conduit de blindage 2 mais sert également d'entretoise empêchant un écartement excessif des bords latéraux 24, 25 de l'ouverture 27.

Grâce à l'invention, on obtient un chemin de câble compact, rapide à monter et à câbler et, de plus, peu coûteux.

## Revendications

1. Chemin de câble de faux-plafond ou de plancher technique destiné à recevoir des câbles de courant fort (7) et des câble de courant faible (8) pour le précâblage de locaux, ledit chemin de câble comprenant une structure allongée de réception (1) formant un berceau dans lequel les câbles (7, 8) sont disposés, caractérisé en ce que ladite structure (1) comprend un conduit (2) s'étendant sur toute la longueur de la structure (1) et destiné à la réception des câbles de courant fort (7), les câbles de courant faible s'étendant dans le berceau à l'extérieur du conduit.

2. Chemin de câble selon la revendication 1, dans lequel le conduit (2) fait partie intégrante de la structure de réception (1).

3. Chemin de câble selon la revendication 1, dans lequel le conduit (2) est rapporté et fixé sur la structure de réception (1).

4. Chemin de câble selon l'une quelconque des revendications précédentes, dans lequel le conduit (2) est métallique ou métallisé.

5. Chemin de câble selon l'une quelconque des revendications précédentes, dans lequel le conduit (2) comporte une ouverture longitudinale (27) orientée vers l'extérieur de la structure (1) et s'étendant sur la totalité de sa longueur.

6. Chemin de câble selon la revendication 5, dans lequel ladite ouverture longitudinale (27) comprend des bords latéraux (24, 25) adaptés à la réception par encliquetage de prises de courant fort (4) et/ou de courant faible (5), et d'éléments de couvercle (6).

7. Chemin de câble selon l'une quelconque des revendications précédentes, dans lequel le conduit (2) comprend des fenêtres arrières d'accès (212) pour le passage des câbles de courant faible (8) à l'intérieur du conduit (2).

8. Chemin de câble selon la revendication 7, dans lequel les fenêtres arrières d'accès (212) sont respectivement pourvues de volets de fermeture rabattables (211).
